Europäisches Patentamt

European Patent Office

Office européen des brevets

(11) Publication number: **0 343 702**
**A2**

# EUROPEAN PATENT APPLICATION

(21) Application number: 89201139.6

(51) Int. Cl.⁴: **G01N 27/28**

(22) Date of filing: **03.05.89**

| | |
|---|---|
| The title of the invention has been amended (Guidelines for Examination in the EPO, A-III, 7.3). | (71) Applicant: **NUOVA SAMIM S.p.A.**<br>**Via Caldera 21**<br>**I-20153 Milan(IT)** |
| (30) Priority: **06.05.88 IT 2049688** | (72) Inventor: **Guerriero, Renato**<br>**Via Ferraglio 72**<br>**I-30175 Mestre Venice(IT)** |
| (43) Date of publication of application:<br>**29.11.89 Bulletin 89/48** | Inventor: **Sentimenti, Emilio**<br>**Via Caduti sul Lavoro 4**<br>**I-31100 Treviso(IT)** |
| (84) Designated Contracting States:<br>**BE DE ES FR** | (74) Representative: **Roggero, Sergio et al**<br>**Ing. Barzanò & Zanardo Milano S.p.A. Via**<br>**Borgonuovo 10**<br>**I-20121 Milano(IT)** |

(54) **Electrochemical analyser.**

(57) A continuous electrochemical analyzer for determining the concentration of such cations as cadmium, lead, copper, antimony in solutions containing them is disclosed, which is based on the application of voltammetric measurements, essentially comprising:
- a cell subdivided by a separation wall into two cell portions, the first one of which is equipped with a solid working electrode of glassy-carbon, with a reference electrode and with a counter-electrode, with the other cell portion being provided with an inlet port and an outlet port for said cationic solutions, both of said ports being situated on the same side of said cell chamber, and from them an "U"-shaped tube element extending, the "U"-shaped end of which extends beyond said separator;
- means for amplifying and detecting the signal relevant to the measurement of the concentration.

FIG. 1

## CONTINUOUS ELECTROCHEMICAL ANALYZER

The present invention relates to a continuous electrochemical analyzer based on the application of voltammetric measurements.

By "voltammetry" the study is understood in general of the current-voltage relationships of a small-size (polarizable) electrode in a system which comprises a (non-polarizable) reference electrode, with both of said electrodes being contained in a high-concentration electrolyte.

By applying increasing voltages to such a system, the only passage of a "weak residual current" takes place, i.e., the current is transported by all of the ionic species existing in the system, with no appreciable phenomena of (whether anodic or cathodic) discharge taking place.

But if small amounts of ions with a low discharge voltage are added, the current continues to be transported by all of the existing ionic species, but at the electrode-solution interface only the processes of lowest-voltage cathodic (and anodic) discharge take place. The ion comes to the electrode-solution interface nearly exclusively owing to diffusion from the farthest regions, and therefore its discharge originates a "threshold" current, which is proportional to its concentration inside the bulk of the solution.

Polarography is a particular case of voltammetry, in which the small-size electrode is constituted by a droplet of mercury dropping out from a capillary tube at regular time intervals. The current-voltage chart which can be obtained is said "polarogram" and can supply both quantitative and qualitative information as to the presence of certain ions in concentrated salt solutions.

When it was developed, the application of polarography gave a considerable impulse to the analytical chemistry; however, the sensitivity of the method was no any longer satisfactory for the present requirements. Other complications had to be coped with owing to the difficulties met in maintaining and measuring voltage and current values with the required rapidity.

In general, the inertia of the system hindered the possible applications thereof on an industrial scale.

For exemplifying purposes, may we mention the method for measuring the cadmium content in the commercial zinc-bearing electrolyte according to a ratio of Zn/Cd which is usually comprised within the range of from 20,000 to 40,000.

The recent developments in the field of the operational amplifiers with the use of transistors led to the use and application of advanced electronic equipment, finally resulting in a general improvement of the voltammetric analysis systems.

The studies on electroanalytical applications for flowing systems have recently become of particular importance, e.g., for control or alarm devices, for recycle purposes, for branched circuits, and so forth.

The adaptation of electroanalytical techniques to flowing systems are anyway not free from difficulties; the generated signals, resulting from reactions of heterogeneous (electrode-solution) kind, yield often non-reproducible effects. This is the typical case of the hanging mercury drop electrodes. It is within this context that the studies for the application of solid microelectrodes are in course; the most widely used ones are the noble metals (Au, Pt), most times as either stationary or moving (revolving) wires or plates.

The following are some advantages offered by the stationary sensors:
- The electrode does not influence the concentration of the sample, owing to the continuous motion relatively to its surface;
- Inasmuch as the diffusion layer which is formed at the electrode-solution interface is thinner than the layer formed by convection, the response times and the sensitivity are improved.
- The use of the voltammetric sensors is facilitated by the fact that the electrodes can be produced within a relatively wide range of sizes and shapes.

On the contrary, the experience demonstrated that the moving (revolving) sensors show sometimes a poor reproducibility.

Among the most recently applied materials, glassy-carbon has assumed a greater and greater importance. In fact, it is endowed with a considerably high hardness, a good electrical conductivity, a high hydrogen overvoltage and a high chemical inertness, as well as a low cost as compared to precious metals.

It has perfectly mirror-like surfaces, suitable for receiving extremely thin mercury layers. The first investigations had concerned the simultaneous deposition of mercury and of the metal to be analysed present in traces: by means of this process, an amalgam can be formed "in situ" with the metal, which can be dissolved again by anodic dissolution.

The layer of mercury can be very thin (thickness comprised within the range of from 0.001 to 0.01 m), and the voltammograms of anodic "stripping" obtained by means of this technique show an excellent sensitivity. Glassy-carbon can be applied to a wide range of support electrolytes and shows to be particularly suitable for routine analyses.

Unfortunately, such pieces of equipment does not make it possible very low cationic concentrations to be determined. For cadmium, e.g., values lower than $10^{-4}$ M cannot be determined.

The present Applicant has found now a device which overcomes the above mentioned drawback, showing very better sensitivities (for example, $10^{-9}$ M cadmium), with simultaneously making it possible the measurements to be carried out in continuous.

In fact, the possibility of carrying out continuous measurements is important as well.

The pulsed, differential anodic voltammetry is a technique which combines a better sensitivity of the instruments with shorter deposition times: these latter are reduced down to one minute or less, so that the electrodic stabilities are no longer a problem and the diffusions into the body of the electrode are kept to a minimum.

The scanning speed with the equipment claimed by the present Applicant is high (up to 200 mV/second) and therefore the system is always under equilibrium conditions, to the full advantage of the reproducibility of the measurements.

The continuous electrochemical analyzer according to the present invention for determining the concentration of such cations as cadmium, lead, copper, antimony in solutions which contain them, based on the application of voltammetric measurements, essentially comprises:
- a cell subdivided by a separation wall into two portions, the first one of which is equipped with a solid working electrode of glassy-carbon, with a reference electrode and with a counter-electrode, with the other portion of said cell being provided with an inlet port and an outlet port for said cationic solutions, with both of said ports being situated on the same side of said cell portion, from which ports an "U"-shaped tube element extends, with the "U"-shaped end of said tube element extending beyond said separation wall;
- means for amplifying and detecting the signal relevant to the measurement of the concentration.

As the reference electrode, one from among those known in the art can be selected, e.g., the Ag/AgCl reference electrode.

Also the counter-electrode used can be selected from among those already used for said analyzers, e.g., the platinum counter-electrode.

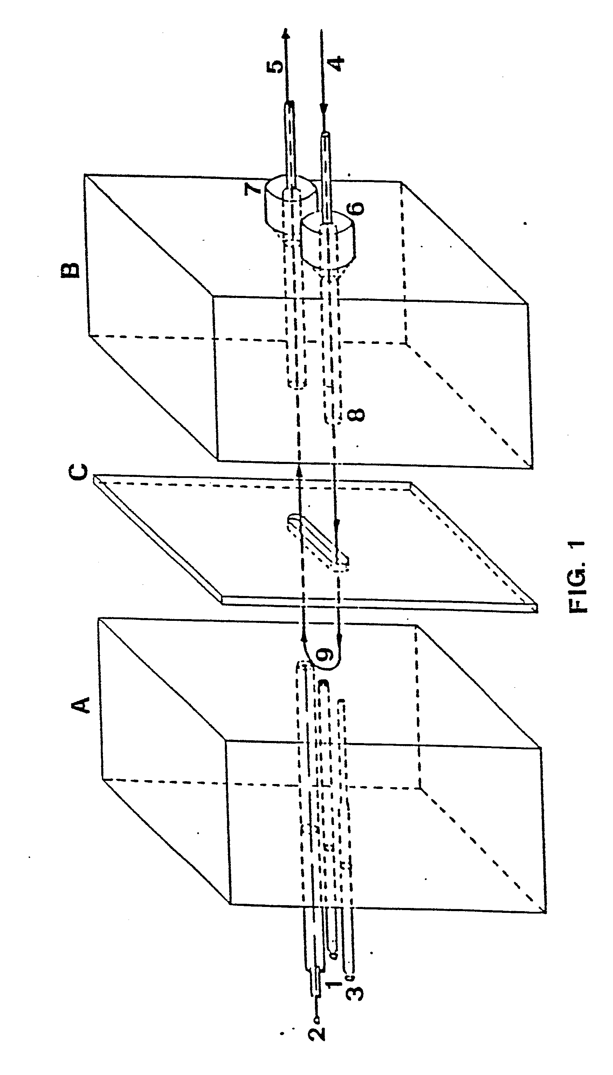

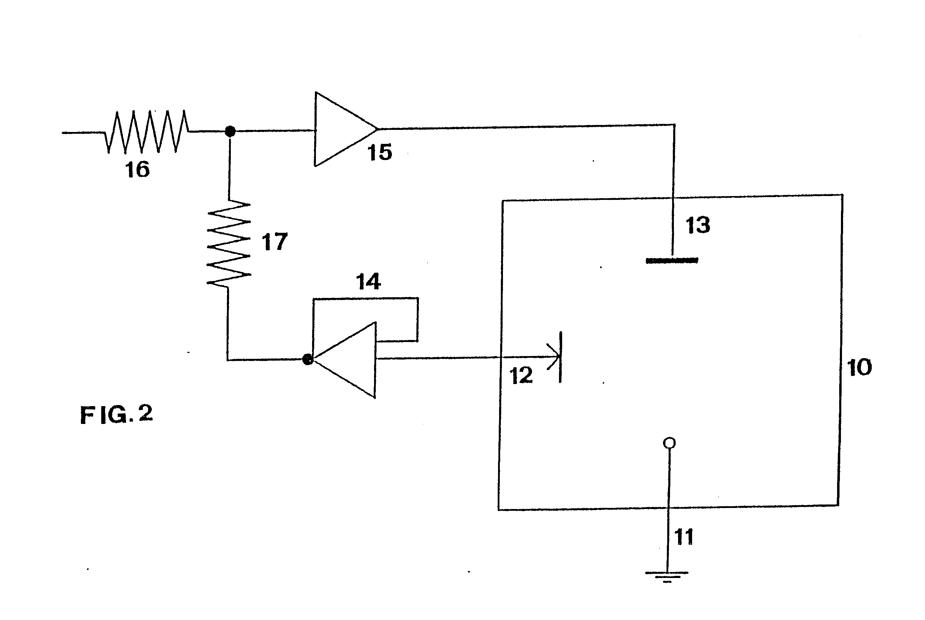

The invention is now illustrated with reference to the hereto attached Figure 1 and Figure 2, which show a preferred form of practical embodiment given for purely indicative and non-limitative purposes, in that technical and structural variants can be practically supplied without departing from the purview of the present invention.

In Figure 1 the cell of the electrochemical analyzer is schematically shown.

The cell is subdivided into two portions [(A) and (B)] by a separation wall (C).

In the (A) portion of the cell, inside which the cationic concentration is measured, a solid working electrode of glassy-carbon (1) , a reference electrode (2) and a counter-electrode (3) are contained.

In the (B) portion of the cell, the incoming cationic solution to be determined is indicated by the reference numeral (4), and the leaving solution is indicated by the reference numeral (5).

Said (B) cell portion is provided with an inlet port (6) and with an outlet port (7), connected by an "U"-shaped tube element (8), the "U"-shaped end of which extends beyong the (C) separation wall, into the (A) portion of the cell.

In Figure 2 an electrical circuit for the measurement of the cationic concentration is schematically shown. In said Figure 2, the reference numerals have the following meaning:

      10 cell
      11 solid working electrode of glassy-carbon
      12 reference electrode
      13 counter-electrode
      14 transducers
      15 transducers
      16, 17 resistors

Some technical data is now given with reference to the analyzer according to the present invention:
- electrodeposition of Hg: 5 minutes at 900 mV
- minimum and maximum times of measurement (recommended values): 15 seconds - 60 seconds
- Average measurement time (recommended value): 28 seconds
- cations which can be determined: Cd, Pb, Cu, Sb
- minimum concentration determined for Cd: $6 \times 10^{-2}$ M
- maximum concentration determined for Cd: $1 \times 10^{-9}$ M

An exampe is given now, which has the purpose of better illustrating the present invention, which example should not be considered as limitative of the same invention.

Example

The measurement was carried out by means of a cell of the type schematically shown in Figure 1.

| - Reference electrode : | Ag/AgCl |
|---|---|
| - Counter-electrode : | Pt |
| - Electrodeposition of Hg : | 5 minutes at 900 mV |
| - Measurement time : | variable |
| - Cations determined : | Cd, Pb, Cu |

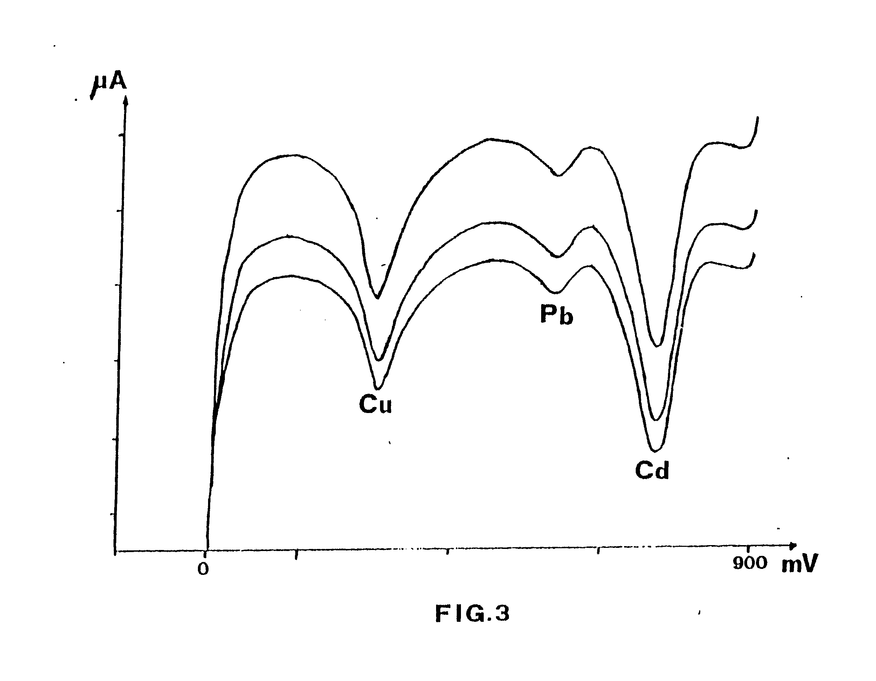

The results obtained are expressed by means of the chart of Figure 3, wherein on the abscissa the voltage as mV and on the ordinate the intensity as $\mu$A are reported.

Claims

1. Continuous electrochemical analyzer for determining the concentration of such cations as cadmium, lead, copper, antimony in solutions which contain them, based on the application of voltammetric measurements, essentially comprising:
- a cell subdivided by a separation wall into two portions, the first one of which is equipped with a solid working electrode of glassy-carbon, with a reference electrode and with a counter-electrode, with the other portion of said cell being provided with an inlet port and an outlet port for said cationic solutions, with both of said ports being situated on the same side of said cell portion, from which ports an "U"-shaped tube element extends, with the "U"-shaped end of said tube element extending beyond said separation wall;
- means for amplifying and detecting the signal relevant to the measurement of the concentration.

**FIG. 1**

EP 0 343 702 A2

**FIG.2**

EP 0 343 702 A2

**FIG.3**

EP 0 343 702 A2